# EUROPEAN PATENT APPLICATION

(11) **EP 2 302 215 A1**
(43) Date of publication of application: **30.03.2011**
(21) Application number: 08765379.6
(22) Date of filing: 10.06.2008
(51) Int. Cl.: F03D 11/04, F03D 7/04, F03D 11/00

(54) **WIND-DRIVEN GENERATOR AND CONSTRUCTION METHOD THEREOF**

(71) Applicant: Mitsubishi Heavy Industries, Ltd., Tokyo 108-8215 (JP)
(72) Inventor: NUMAJIRI, Tomohiro, Nagasaki-shi Nagasaki 850-8610 (JP)
(74) Representative: Intès, Didier Gérard André
(86) International application number: PCT/JP2008/060590
(87) International publication number: WO 2009/150715

(57) **Abstract**

A wind turbine generator is provided that allows the use of a general-purpose crane for construction through a reduction in the weight of a nacelle (3). This wind turbine generator includes a yaw system (10A) that includes a yaw drive unit (15A), a yaw slew ring (11A), and a yaw brake (20A) and that slews the nacelle (3), mounted on top of a tower (2), depending on wind direction. This yaw system (10A) is disposed on the tower (2) top side.

## Description

### Technical Field

The present invention relates to a wind turbine generator including a yaw system that slews a nacelle (main body of a wind turbine) depending on wind direction and to a method for constructing the wind turbine generator.

### Background Art

Conventionally, a wind turbine generator that rotates a wind turbine by wind power and transmits the rotational movement to a generator to generate electricity includes a yaw system that slews a nacelle (turns its head) depending on wind direction.
A conventional yaw system is constituted of a yaw drive unit, a yaw slew ring, and a yaw brake, and the main components are disposed on the nacelle side. That is, the operation of the yaw system allows the nacelle, on which a wind turbine and a power train that generates electricity by the rotational force thereof are mounted, to slew at the top of a tower so as to face the optimal direction depending on wind direction.

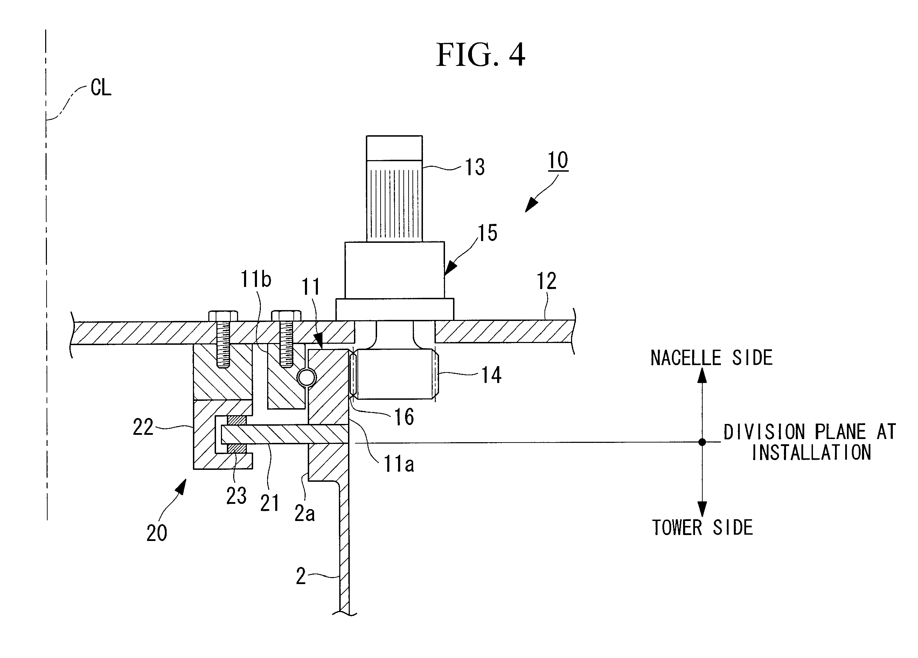

For a yaw system 10 of a first conventional example shown in Fig. 4, a nacelle is slewably attached to the fixed side, namely, to a tower 2, with a yaw slew ring 11 constituted by a rolling bearing disposed therebetween. Reference sign 12 in the drawing refers to a nacelle base plate constituting the nacelle, and a yaw drive unit 15 including a motor 13 and a drive gear 14 are mounted on and fixed to the nacelle base plate 12.

This case is an example of the structure in which the yaw drive unit 15 is disposed outside the tower 2 because reference sign CL in the drawing refers to an axis center line of the tower 2.
The yaw drive unit 15 has the drive gear 14 meshed with a ring gear 16 on the fixed side so that the nacelle, which is integrated with a slew-side ring (inner ring) 11b of the yaw slew ring 11, can slew relative to a fixed-side ring (outer ring) 11a by rotation of the motor 13. The ring gear 16 is disposed on the outer circumferential surface of the fixed-side ring 11a.

The above yaw system 10 includes a yaw brake 20 attached and fixed to the nacelle base plate 12 inside the tower 2.
This yaw brake 20 includes a disk 21 fixed to and supported between a top flange portion 2a of the tower 2 and the fixed-side ring 11a of the yaw slew ring 11 and calipers 22 fixed to and supported on the nacelle base plate 12 and produces a braking force by pressing against the top and bottom surfaces of the disk 21 with brake pads 23 disposed on the calipers 22 (see, for example, Patent Document 1).

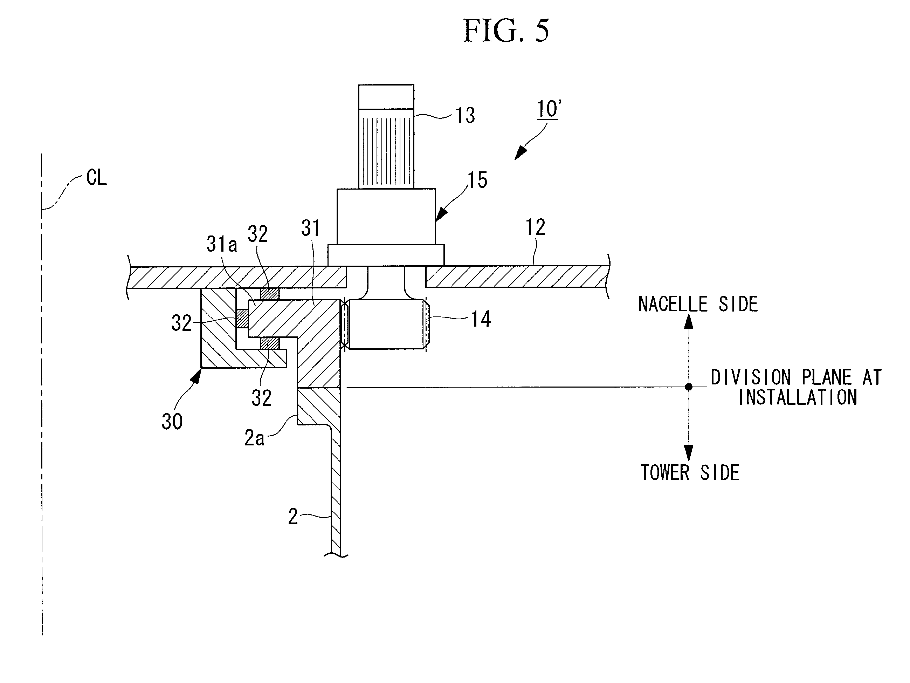

A yaw system 10¹ of a second conventional example shown in Fig. 5, on the other hand, uses a plain bearing 30 functioning as a yaw brake. This plain bearing 30 is constituted of a fixed seat 31 fixed to a flange portion 2a of a tower 2 and brake pads 32 slidably supporting a flange portion 31a of the fixed seat 31 on the top, bottom, and outer circumferential surfaces thereof.
The structure of a yaw drive unit 15 is substantially the same as that of the first conventional example described above (see, for example, Patent Document 2).
Patent Document 1:
   Publication of Japanese Patent No. 3586480
Patent Document 2:
   Japanese Unexamined Patent Application, Publication No. 2007-51585

### Disclosure of Invention

The recent trend is that the size (output power) of wind turbine generators has been increasing, and the increased size of wind turbine generators has resulted in increased nacelle weight. In the first and second conventional examples described above, the plane that separates the nacelle side from the tower side during construction is the plane at which the flange portion 2a of the tower 2 side and the disk 21 or fixed seat 31 of the nacelle side are joined together with, for example, bolts and nuts (not shown).
Recently, therefore, existing general-purpose construction cranes have been insufficient in terms of capacity, and this situation is occasionally addressed by developing dedicated cranes for wind turbine generators. The development and use of such dedicated cranes contributes to increased construction costs.

Thus, the construction costs can be reduced if the capacity of the crane used for construction is lowered by reducing the nacelle weight so that a general-purpose crane can be used. Hence, a structure contributing to a reduction in nacelle weight, particularly through improvement of the yaw system, has been demanded of wind turbine generators.
An object of the present invention, which has been made in light of the above circumstances, is to provide a wind turbine generator and a method for constructing the wind turbine generator that allow the use of a general-purpose crane for construction through a reduction in the weight of a nacelle.

To solve the above problem, the present invention employs the following solutions.
A wind turbine generator according to the present invention includes a yaw system that slews a nacelle mounted on top of a tower depending on wind direction, and the yaw system includes a yaw drive unit, a yaw slew ring, and a yaw brake and is disposed on the tower top side.

In this wind turbine generator, because the yaw system, which includes the yaw drive unit, the yaw slew ring, and the yaw brake, is disposed on the tower top side, the weight of the nacelle can be reduced. That is, because the yaw system, which is conventionally attached to the nacelle side, is relocated to the tower side, the weight of the nacelle can be reduced by that of the yaw system.

A method for constructing a wind turbine generator according to the present invention includes a yaw system that slews a nacelle mounted on top of a tower depending on wind direction, the yaw system includes a yaw drive unit, a yaw slew ring, and a yaw brake, and the tower is divided into a plurality of pillar members in a longitudinal direction and is built by coupling the pillar members together. This method includes a step of attaching components of the yaw system to the topmost pillar member of the tower, a step of building the tower by coupling the pillar members together, and a step of attaching the nacelle to a top end of the tower.

Because the method for constructing a wind turbine generator includes the step of attaching the components of the yaw system to the topmost pillar member of the tower, the step of building the tower by coupling the pillar members together, and the step of attaching the nacelle to the top end of the tower, the weight of the nacelle is reduced by that of the yaw system relocated to the pillar-member side. Accordingly, a load imposed on a crane is reduced, so that a general-purpose crane can be used to carry out a procedure for hoisting the nacelle with the crane and attaching it to the top of the tower.

In the present invention described above, because the yaw system is attached to the top of the tower, the weight of the nacelle can be reduced by that of the yaw system, so that the capacity of the crane used for construction can be reduced. As a result, even if the weight of the nacelle is increased as the size of the wind turbine generator is increased, the increase in the weight of the nacelle can be alleviated by that of the yaw system, thus extending the permissible range of construction using a general-purpose crane, which contributes to reduced construction costs.

### Brief Description of Drawings

[FIG. 1] Fig. 1 is a partial sectional view showing an example of the structure of a tower top and a yaw system as an embodiment of a wind turbine generator and a method for constructing the apparatus according to the present invention.
[FIG. 2] Fig. 2 is a diagram showing an example of the overall structure of the wind turbine generator according to the present invention.
[FIG. 3] Fig. 3 is a partial sectional view showing an example of the structure of a tower top and a yaw system as another embodiment of the wind turbine generator and the method for constructing the apparatus according to the present invention.
[FIG. 4] Fig. 4 is a partial sectional view showing a first conventional example of a yaw system of a wind turbine generator.
[FIG. 5] Fig. 5 is a partial sectional view showing a second conventional example of a yaw system of a wind turbine generator.

### Explanation of Reference Signs:

- 1:: wind turbine generator
- 2:: tower
- 3:: nacelle
- 4:: rotor head
- 10A,: 10B: yaw system
- 11A:: yaw slew ring
- 12:: nacelle base plate
- 14:: drive gear
- 15A:: yaw drive unit
- 16:: ring gear
- 20A:: yaw brake
- 30B:: plain bearing (yaw slew ring)

### Best Mode for Carrying Out the Invention

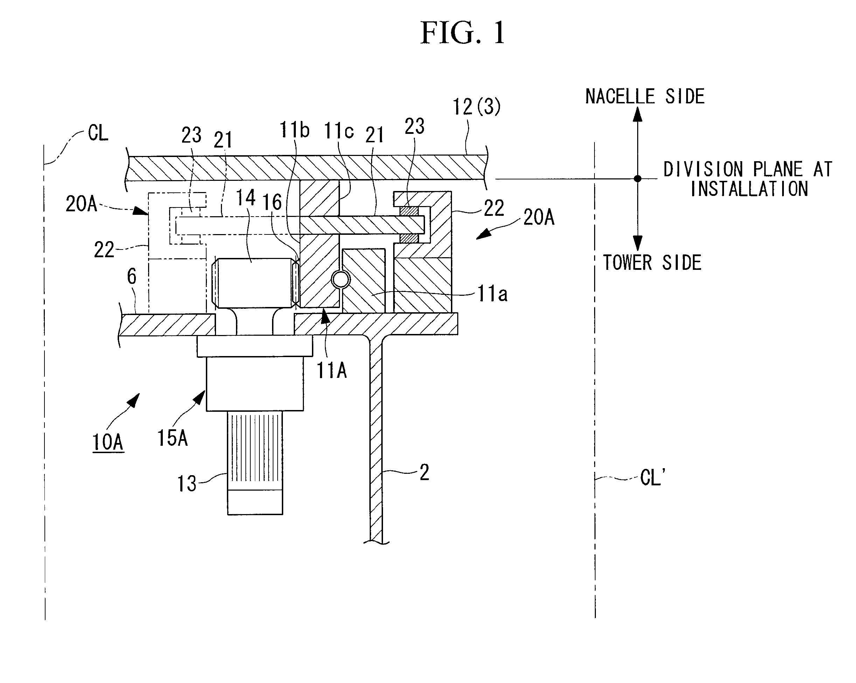

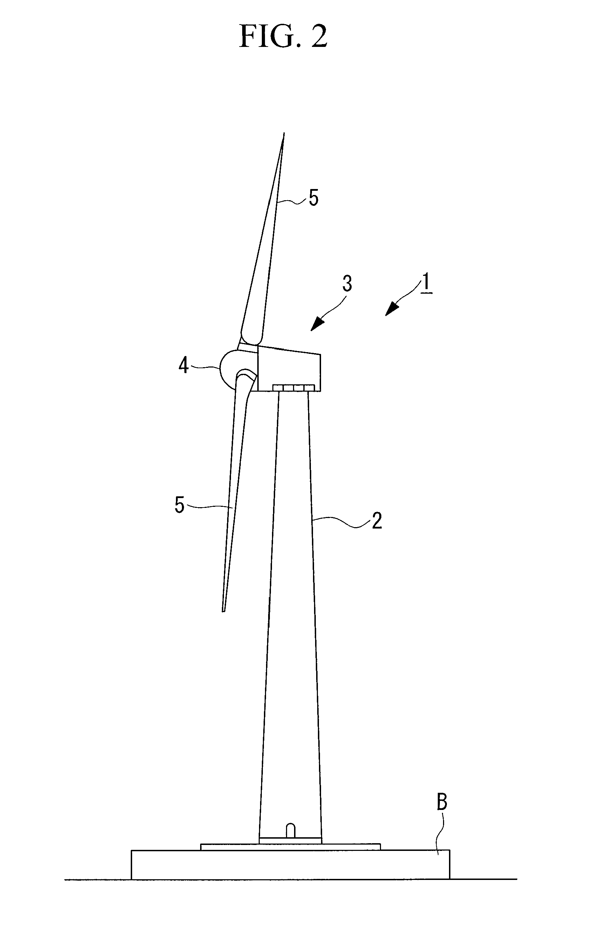

An embodiment of a wind turbine generator according to the present invention will now be described with reference to Figs. 1 and 2.
A wind turbine generator 1 shown in Fig. 2 includes a tower 2 disposed upright on a foundation B, a nacelle 3 mounted at the top end of the tower 2, and a rotor head 4 disposed on the nacelle 3 and supported so as to be rotatable about a substantially horizontal rotation axis.
The rotor head 4 has a plurality of (for example, three) wind turbine rotor blades 5 attached thereto radially around the rotation axis thereof. This allows wind power received by the wind turbine rotor blades 5 in the rotation-axis direction of the rotor head 4 to be converted into power rotating the rotor head 4 about the rotation axis.

The above wind turbine generator 1 includes a yaw system that slews the nacelle 3, which is positioned at the top end of the tower 2. This yaw system is a system for directing the nacelle 3 in the optimum direction depending on the wind direction to efficiently rotate the rotor head 4 and generate electricity.

A yaw system 10A shown in Fig. 1 includes a yaw drive unit 15A, a yaw slew ring 11A, and a yaw brake 20A and is disposed on top of the tower 2.
That is, the yaw drive unit 15A, the yaw slew ring 11A, and the yaw brake 20A, which constitute the yaw system 10A, are attached and fixed to the fixed side, namely, to the tower 2. The following description will focus on the case where the axis center line of the tower 2 is located at CL (structure drawn in the solid lines in Fig. 1).

The nacelle 3 is slewably attached to the top end of the tower 2 such that the yaw slew ring 11A, which is constituted by a rolling bearing, is disposed therebetween. Reference sign 12 in the drawing refers to a nacelle base plate constituting the nacelle 3.
The yaw drive unit 15A includes a motor 13 and a drive gear 14 and is mounted on and fixed to the bottom surface of a fixed support plate 6 constituting the top end of the tower 2. In this case, the yaw drive unit 15A is disposed inside the tower 2 because the axis center line of the tower 2 is located at CL.
The above fixed support plate 6 may be integrated with the tower 2 or may be configured as a separate plate attached later.

The yaw drive unit 15A rotates the drive gear 14 with the motor 13. The drive gear 14 meshes with a ring gear 16 on the slew side. In this case, the ring gear 16 is formed on an inner circumferential surface of a slew-side ring 11b on the slew side of the yaw slew ring 11A.
The yaw slew ring 11A is a rolling bearing including a fixed-side ring 11a on the outer-ring side and the slew-side ring 11b on the inner-ring side with numerous rolling members (such as balls) disposed therebetween. The bottom end surface of the fixed-side ring member 11a of the yaw slew ring 11A is fixed to the fixed support plate 6, whereas the top end surface of the slew-side ring member 11b is fixed to the bottom surface of the nacelle base plate 12 with a disk 21 and a coupling ring member 11c, described later, disposed therebetween.

The above yaw system 10A includes the yaw brake 20A, which is attached and fixed to the top surface of the fixed support plate 6. This yaw brake 20A includes the disk 21, which is fixed to and supported between the coupling ring member 11c fixed to the bottom surface of the nacelle base plate 12 and the slew-side ring member 11b, and also includes calipers 22 fixed to and supported on the fixed support plate 6.
This yaw brake 20A produces a braking force stopping slewing of the nacelle 3 by pressing against the top and bottom surfaces of the disk 21 with a pair of top and bottom brake pads 23 disposed on the calipers 22.

In the above wind turbine generator 1, because the yaw system 10A, which includes the yaw drive unit 15A, the yaw slew ring 11A, and the yaw brake 20A, is disposed not on the nacelle 3 side as in a conventional structure, but on the fixed support plate 6 on top of the tower 2, the weight of the nacelle 3 can be reduced by that of the yaw system 10A. That is, because the yaw system 10A, which is conventionally attached to the nacelle 3 side, is all relocated to the tower top side (to the top end of the tower 2), the hoisting weight of the nacelle 3 required for construction can be reduced by that of the yaw system 10A.

A method (procedure) for constructing the above wind turbine generator 1 will now be described.
The wind turbine generator 1 described below includes the yaw system 10A, which slews the nacelle 3 mounted on top of the tower 2 depending on wind direction, and the yaw system 10A includes the yaw drive unit 15A, the yaw slew ring 11A, and the yaw brake 20A. The tower 2 has a segmented structure constructed by stacking. In the segmented structure, the tower 20 is divided into a plurality of (usually, three or more) pillar members in the longitudinal direction thereof, and the pillar members are coupled together by, for example, flange joints.

That is, because the height of the tower 2 is increased as the size of the wind turbine generator 1 is increased, the structure and the construction method in which the tower 2 is divided into a plurality of pillar members and is assembled at a construction site are employed to facilitate transportation from a factory to the construction site.
Accordingly, a method for constructing the wind turbine generator 1 includes a step of attaching the components of the yaw system 10A to the topmost pillar member of the tower 2, a step of building the tower 2 by coupling the pillar members together, and a step of attaching the nacelle 3 to the top end of the tower 2.

In the step of attaching the yaw system 10A to the topmost pillar member, the yaw drive unit 15A, the yaw slew ring 11A, and the yaw brake 20A are attached to predetermined positions of the pillar member at a factory or a construction site. As a result, the weight of the pillar member is increased by that of the yaw system 10A, but the pillar member is much lighter than the nacelle 3, which accommodates, for example, a gear box and a generator.
In the step of building the tower 2 by coupling the pillar members together, therefore, a general-purpose crane can be used as the crane for hoisting the pillar member equipped with the yaw system 10A up to the topmost position.

After the tower 2 is thus completed, the step of attaching the nacelle 3 to the top end of the tower 2 is carried out. In this step, the nacelle 3, which is lighter than that of a conventional structure because the yaw system 10A is removed, is hoisted by the crane. In this case, the plane that separates the tower 2 from the nacelle 3 during construction is the plane at which the top surface of the coupling ring member 11c and the bottom surface of the nacelle base plate 12 are joined together, and the coupling ring member 11c and the nacelle base plate 12 are coupled together by, for example, bolting.
Hence, because the capacity of the crane is reduced by the reduction in the weight of the nacelle 3, a hoisting procedure can be carried out using a general-purpose crane. As a result, the wind turbine generator 1, employing the structure and the construction method described above, can prevent a significant increase in construction costs due to development and production of a dedicated crane.

Because the method for constructing the wind turbine generator 1 includes the step of attaching the components of the yaw system 10A to the topmost pillar member of the tower 2, the step of building the tower 2 by coupling the pillar members together, and the step of attaching the nacelle 3 to the top end of the tower 2, the weight of the nacelle 3 is reduced by that of the yaw system 10A relocated to the pillar-member side. Accordingly, a load imposed on the crane is reduced, so that a general-purpose crane can be used to carry out the procedure for hoisting the nacelle 3 with the crane and attaching it to the top of the tower 2.

Although the structure in which the yaw drive unit 15A is disposed inside the tower 2 with the axis center line located at CL is employed in the above embodiment, the drive unit 15A may be disposed outside the tower 2 with the axis center line located at, for example, CL' (see Fig. 1).
In addition, the position of the yaw brake 20A is not limited to that of the embodiment indicated by the solid lines; it may instead be disposed as indicated by the imaginary lines in the drawing. In this case, the axis center line of the tower 2 may be located either at CL' or at CL.

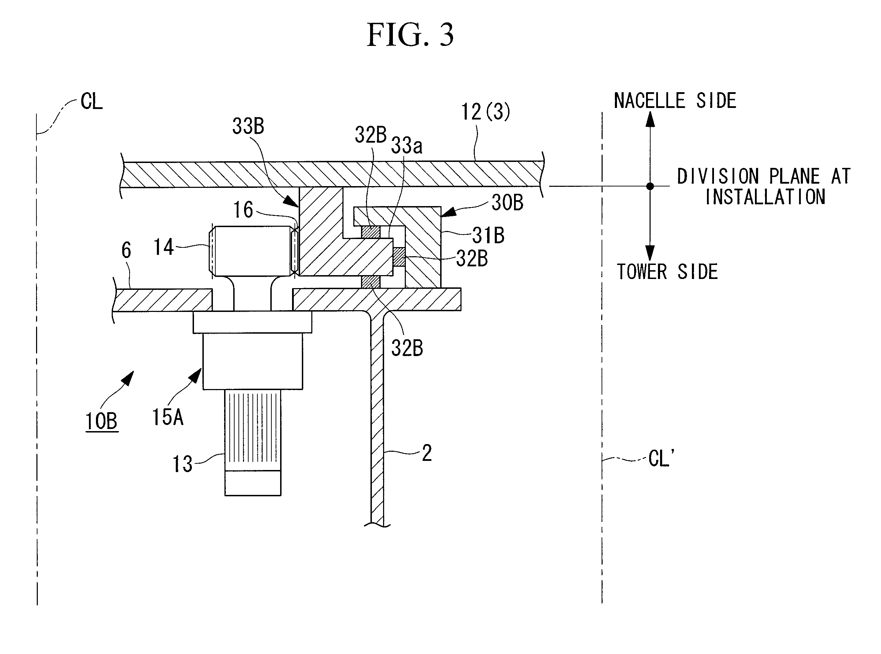

Next, another embodiment of the wind turbine generator 1 according to the present invention will be described with reference to Fig. 3, where parts similar to those in the above embodiment are indicated by the same reference signs, and a detailed description thereof will be omitted.
In this embodiment, a yaw system 10B is all disposed at the top end of the tower 2. In this case, as a yaw slew ring, the yaw system 10B employs a plain bearing 30B functioning as a yaw brake.

The plain bearing 30B is configured so that it supports a flange portion 33a of a slew ring 33B with a substantially L-shaped cross section so as to be slidable between brake pads 32B on a fixed seat 31B fixed to the fixed support plate 6 of the tower 2. In this case, the brake pads 32B slidably support three surfaces, namely, the top, bottom, and outer circumferential surfaces of the flange portion 33a.
In this case, the yaw drive unit 15A is substantially the same as that of the first embodiment described above except that the ring gear 16 meshing with the drive gear 14 is formed on the inner circumferential surface of the slew ring 33B.

In the wind turbine generator 1 employing the yaw system 10B thus configured, because all components thereof are disposed on the fixed support plate 6 on the top of the tower 2, the weight of the nacelle 3 can be reduced by that of the yaw system 10B. That is, because the plane of separation during construction in this case is the plane at which the bottom surface of the nacelle base plate 12 and the top surface of the slew ring 33B are joined together by bolting, the hoisting weight of the nacelle 3 required for construction can be reduced by that of the yaw system 10B.

In addition, although the structure in which the yaw drive unit 15A is disposed inside the tower 2 with the axis center line of the tower 2 located at CL is employed in this embodiment, the drive unit 15A may be disposed outside the tower 2 with the axis center line located at CL'.
In addition, the position of the plain bearing 30B functioning as a yaw brake is not limited to that of the embodiment shown in Fig. 3; it may instead be disposed, for example, on the opposite side with respect to the positional relationship with the drive gear 14 (on the axis center line CL side).

In the wind turbine generator 1 of the present invention, as described above, because the yaw system 10A or 10B is attached to the top of the tower 2, the weight of the nacelle 3 can be reduced by that of the yaw system 10A or 10B, so that the capacity of the crane used for construction can be reduced. Hence, even if the weight of the nacelle 3 is increased as the size of the wind turbine generator 1 is increased, the increase in the weight of the nacelle 3 can be alleviated by that of the yaw system 10A or 10B, thus extending the permissible range of construction using a general-purpose crane, which contributes to reduced construction costs.
The present invention is not limited to the above embodiments; modifications are permitted as needed without departing from the spirit thereof.

## Claims

1. A wind turbine generator including a yaw system that slews a nacelle mounted on top of a tower depending on wind direction,
wherein the yaw system includes a yaw drive unit, a yaw slew ring, and a yaw brake and is disposed on the tower top side.

2. A method for constructing a wind turbine generator including a yaw system that slews a nacelle mounted on top of a tower depending on wind direction, wherein the yaw system includes a yaw drive unit, a yaw slew ring, and a yaw brake and wherein the tower is divided into a plurality of pillar members in a longitudinal direction and is built by coupling the pillar members together, the method comprising:
a step of attaching components of the yaw system to the topmost pillar member of the tower;
a step of building the tower by coupling the pillar members together; and
a step of attaching the nacelle to a top end of the tower.
